# EUROPÄISCHE PATENTSCHRIFT

(11) **EP 2 954 191 B1**
(45) Veröffentlichungstag und Bekanntmachung des Hinweises auf die Patenterteilung: **06.09.2017**
(21) Anmeldenummer: 14700714.0
(22) Anmeldetag: 17.01.2014
(51) Int. Cl.: F02M 61/16, F02M 51/06, B01D 29/58

(54) **VENTIL ZUM ZUMESSEN VON FLUID, DAS EINE FILTERVORRICHTUNG ENTHÄLT**
VALVE FOR METERING A FLUID COMPRISING A FILTER
SOUPAPE DE DOSAGE D'UN FLUIDE COMPRENANT UN FILTRE

(30) Priorität: 06.02.2013 DE 102013201897
(43) Veröffentlichungstag der Anmeldung: 16.12.2015
(73) Patentinhaber: Robert Bosch GmbH, 70442 Stuttgart (DE)
(72) Erfinder: POHLMANN, Jens, 74321 Bietigheim-Bissingen (DE); SCHEFFEL, Martin, 71665 Vaihingen (DE); ITTLINGER, Ralph, 71287 Weissach (DE)
(86) Internationale Anmeldenummer: PCT/EP2014/050863
(87) Internationale Veröffentlichungsnummer: WO 2014/121996

(56) Entgegenhaltungen:
- EP-A2- 1 918 576
- DE-A1- 4 421 881
- DE-A1-102005 037 552
- DE-A1-102006 047 557
- JP-A- 2006 029 195
- US-A- 2 068 858
- US-A- 2 265 550
- US-A- 2 883 056
- US-A- 4 954 251

## Beschreibung

### Stand der Technik

Die Erfindung geht aus von einem Ventil zum Zumessen von Fluid nach dem Oberbegriff des Anspruchs 1, wobei der für ein strömendes oder fließendes Medium stehende übergeordnete Begriff Fluid in Übereinstimmung mit der Strömungslehre für Gase und Flüssigkeiten verwendet wird.

Ein bekanntes Kraftstoff- oder Brennstoffeinspritzventil (DE 10 2005 061 424 A1) weist einen Anschlussstutzen mit einem Einströmkanal für den Kraft- oder Brennstoff auf, der sich in einen durch einen hohlen Magnetkern eines Elektromagneten und durch eine hohle Ventilnadel mit einem Schließkopf zum Steuern einer Zumessöffnung verlaufenden Strömungskanal für den Brennstoff fortsetzt. Zur Herausfilterung von Fremdpartikeln im Brennstoff, die aufgrund ihrer Größe im Einspritzventil Verstopfungen oder Beschädigungen verursachen können, ist in den Einströmkanal des Anschlussstutzens eine Filtervorrichtung eingesetzt. Die Filtervorrichtung weist einen Filtertopf mit einem für das Fluid nicht durchströmbaren Topfboden und einer im Topfmantelbereich angeordneten Filterstruktur, wie Filtergewebe, Gitter oder Sieb, auf. Im Bereich der Topföffnung ist der Filtertopf von einem radial vorspringenden Ringbund umschlossen, der an der Kanalwand des Einströmkanals dicht anliegt. Der Brennstoff tritt axial in den Filtertopf ein und radial durch die Filterstruktur im Topfmantelbereich wieder aus dem Filtertopf aus.

Ein weiteres Kraftstoff- oder Brennstoffeinspritzventil mit einem Filter ist aus EP 1 918 576 A2 bekannt. Bei solchen Kraftstoff- oder Brennstoffeinspritzventilen hat es sich gezeigt, dass größere Einzelpartikel, die vorwiegend aus Fertigungs- und Montagevorgängen des Kraftstoff- oder Brennstoffsystems stammen und sich in der Filtervorrichtung ansammeln, eine Beschädigung der Filterstruktur, z.B. ein Zerschneiden des feinporigen Filtergewebes, verursachen, so dass im weiteren Betrieb Verunreinigungen im Brennstoff ungehindert in das Ventil eindringen können und dort zu Dichtheitsproblemen und veränderten Funktionen führen.

### Offenbarung der Erfindung

Das erfindungsgemäße Ventil zum Zumessen von Fluid mit den Merkmalen des Anspruchs 1 hat den Vorteil, dass durch das Vorsehen eines Grobfilters und eines diesem in Strömungsrichtung des Fluids nachgeordneten Feinfilters die Robustheit der Filtervorrichtung gegen größere Partikel im Fluid, wie sie bei Fertigungs- und Montagevorgängen des Fluidsystems, in dem die Filtervorrichtung zum Einsatz kommt, anfallen, deutlich erhöht wird. Die groben Partikel werden in dem als Vorfilter eingesetzten, deutlich stabileren Grobfilter aufgefangen und können damit nicht die feinmaschige Filterstruktur des Feinfilters beschädigen. Somit ist sichergestellt, dass die üblicherweise im Fluid enthaltenen kleineren Partikel zuverlässig im unbeschädigten Feinfilter aufgefangen werden und nicht in das Ventil eindringen können. Damit werden Dichtheitsprobleme und Veränderungen der Funktionen und der Zumessgenauigkeit des Ventils weitgehend unterbunden und die Standzeit des Ventils deutlich vergrößert.

Durch die in den weiteren Ansprüchen aufgeführten Maßnahmen sind vorteilhafte Weiterbildungen und Verbesserungen des im Anspruch 1 angegebenen Ventils möglich.

Gemäß der Erfindung sind Grob- und Feinfilter jeweils als Filtertopf konfiguriert, der eine Topföffnung, einen geschlossenen, vom Fluid nicht durchströmbaren Topfboden, einen mit mindestens einem Filterfenster versehenen Topfmantel und einen an der Topföffnung über den Topfmantel radial überstehenden Ringbund aufweist, der sich dichtend an die Kanalwand des Strömungskanals anpresst. Das mindestens eine Filterfenster des Grobfilters weist eine grobmaschige oder grobporige Filterfläche und das mindestens eine Filterfenster des Feinfilters eine feinmaschige oder feinporige Filterfläche auf. Die Filtertöpfe sind fertigungstechnisch einfach als einheitliches Kunststoffspritzteil hergestellt. Alternativ ist es auch möglich, nur den Filtertopf im Kunststoffspritzverfahren herzustellen und an die aus einem Metallgewebe bestehenden Filterflächen anzuspritzen.

Die Zusammenstellung der beiden Filtertöpfe zu der Filtervorrichtung kann in verschiedener Weise erfolgen. So können Grob- und Feinfilter im Strömungskanal so angeordnet sein, dass die Topföffnung des Feinfilters dem Topfboden des Grobfilters zugekehrt ist und einen lichten Abstand vom Topfboden aufweist. Alternativ können die Filtertöpfe im Strömungskanal so angeordnet sein, dass ihre Topfböden oder ihre Topföffnungen einander zugekehrt sind. Dabei können sowohl die Topfböden als auch die Topföffnungen unmittelbar aneinanderliegen oder einen lichten Abstand voneinander aufweisen. Bei allen diesen Modifikationen der Filtervorrichtung durchströmt das Fluid nacheinander die Filterflächen von Grob- und Feinfilter.

In einer bevorzugten Ausführungsform der Erfindung liegen die Topfböden der beiden Filtertöpfe aneinander und sind einstückig miteinander ausgeführt. Dadurch bildet die Filtervorrichtung eine Baueinheit, die einfach herzustellen und vorteilhaft zu montieren ist. Die an beiden voneinander abgekehrten Enden der Filtervorrichtung vorhandenen Ringbunde stützen die Filtervorrichtung stabil im Strömungskanal ab und erzwingen den nacheinander erfolgenden Durchfluss des Fluids durch die Filterflächen von Grob- und Feinfilter.

Gemäß einer alternativen Ausführungsform der Erfindung können auch die beiden jeweils eine Topföffnung umgebenden Ringbunde aneinanderliegen und einstückig miteinander ausgeführt sein. In diesem Fall wird die Filtervorrichtung nur mittig im Strömungskanal abgestützt.

Die Erfindung betrifft im Weiteren eine Filtervorrichtung zum Anordnen in einem vom Fluid durchströmten Strömungskanal, die einen Grobfilter und einen mit diesem fest verbundenen Feinfilter aufweist, wobei der Feinfilter in der vorgegebenen Durchströmungsrichtung der Filtervorrichtung hinter dem Grobfilter angeordnet ist.

Gemäß einer vorteilhaften Ausführungsform der Filtervorrichtung ist sowohl der Grobfilter als auch der Feinfilter als Filtertopf ausgebildet, der eine Topföffnung, einen vom Fluid nicht durchströmbaren Topfboden, einen mit mindestens einem Filterfenster versehenen Topfmantel und einen an der Topföffnung radial über den Topfmantel überstehenden, einen Dichtsitz zum Strömungskanal herstellenden Ringbund aufweist. Die Topfböden der beiden Filtertöpfe liegen aneinander und sind einstückig miteinander ausgeführt. Das mindestens eine Filterfenster des Grobfilters weist eine grobmaschige oder grobporige Filterfläche und das mindestens eine Filterfenster des Feinfilters eine feinmaschige oder feinporige Filterfläche auf. Eine solche baueinheitliche Filtervorrichtung lässt sich kostengünstig fertigen und bietet Vorteile bei der Montage in einem Fluidführungssystem.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Figur 1 einen Längsschnitt eines Ventils zum Zumessen von Fluid mit einer Filtervorrichtung,
Figur 2 eine vergrößerte Darstellung der Filtervorrichtung in Figur 1 im Schnitt gemäß Linie II - II in Figur 3,
Figur 3 einen Schnitt der Filtervorrichtung längs der Linie III - III in Figur 2,
Figur 4 eine perspektivische Darstellung der Filtervorrichtung in Figur 2,
Figur 5 eine vergrößerte Darstellung des Ausschnitts V in Figur 1 mit einer modifizierten Filtervorrichtung,
Figur 6 eine gleiche Darstellung wie in Figur 5 mit einer weiteren Modifizierung der Filtervorrichtung,
Figur 7 eine gleiche Darstellung wie in Figur 5 mit einer dritten Modifizierung der Filtervorrichtung.

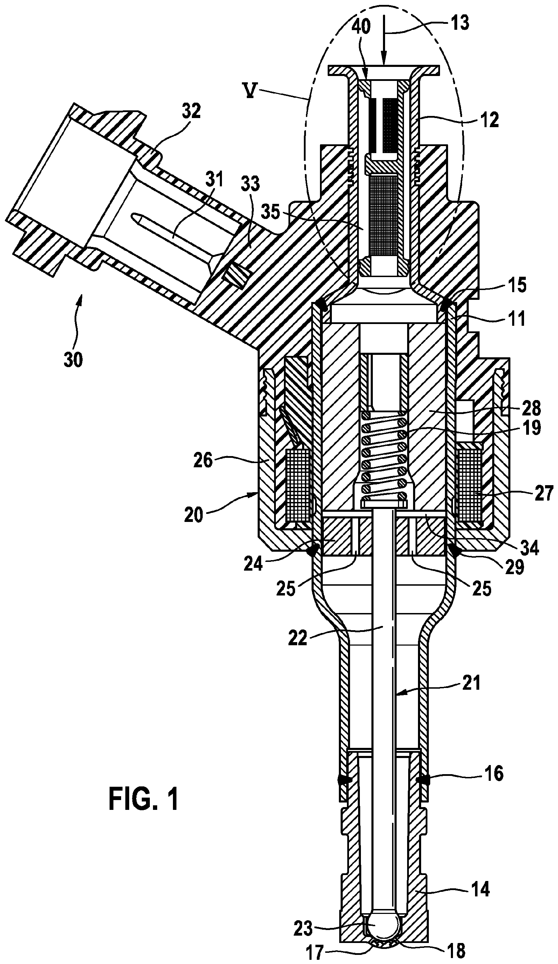

Das in Figur 1 im Längsschnitt dargestellte Ventil zum Zumessen von Fluid wird beispielsweise bei Brennkraftmaschinen als Einspritzventil zum Einspritzen von Brenn- oder Kraftstoff in das Saugrohr oder den Brennraum der Brennkraftmaschine oder als Dosierventil zum Zumessen einer Harnstoff-Wasser-Lösung in das Abgasrohr der Brennkraftmaschine eingesetzt. Auch in mit Heizöl oder Gas betriebenen Heizungsanlagen und in Gasmotoren findet das Ventil Anwendung.

Das in Figur 1 im Längsschnitt dargestellte Ventil zum Zumessen von Fluid weist ein rohrförmiges Ventilgehäuse 11 auf, in dessen einem Stirnende ein Anschlussstutzen 12 mit Fluidzulauf 13 und in dessen anderem Stirnende ein hohler Ventilsitzträger 14 eingesetzt ist. Anschlussstutzen 12 und Ventilsitzträger 14 sind mit dem Ventilgehäuse 11 stoffschlüssig verbunden. Der Stoffschluss ist jeweils durch Schweißen hergestellt, wie dies in Figur 1 durch die Schweißnähte 15 bzw. 16 angedeutet ist. Im Ventilsitzträger 14 ist eine Zumessöffnung 17 und ein die Zumessöffnung 17 umschließender Ventilsitz 18 ausgebildet. Im Falle des Einsatzes als Kraftstoff-Einspritzventil bildet die Zumessöffnung 17 eine Kraftstoff-Einspritzöffnung, die in das Saugrohr oder den Brennraum der Brennkraftmaschine hineinragt. Ein von einer Ventilschließfeder 19 und einem Elektromagneten 20 betätigtes Ventilglied 21 weist eine langgestreckte, massive Ventilnadel 22 und einen an dem der Zumessöffnung 17 zugekehrten Ende der Ventilnadel 22 fest angeordneten Schließkopf 23 auf, der zum Schließen und Freigeben der Zumessöffnung 17 mit dem Ventilsitz 14 zusammenwirkt. Die Ventilschließfeder 19 wirkt auf die vom Schließkopf 23 abgekehrte, flanschartig verbreiterte Rückseite der Ventilnadel 22, und unmittelbar an diesem Ende der Ventilnadel 22 ist auf dieser ein Magnetanker 24 des Elektromagneten 20 befestigt, der mindestens eine Durchtrittsbohrung 25 für das Fluid aufweist.

Der Elektromagnet 20 weist in bekannter Weise einen Magnettopf 26, eine Magnetspule 27, bestehend aus einem Spulenträger und einer auf den Spulenträger aufgewickelten Erregerspule, und einen Magnetkern 28 auf. Der Magnettopf 26 ist mittels einer Ausnehmung im Topfboden auf das Ventilgehäuse 11 aufgesetzt und am Topfboden mit dem Ventilgehäuse 11 verschweißt, wie dies durch die Schweißnaht 29 angedeutet ist. Die im Magnettopf 26 aufgenommene Magnetspule 27 ist mit ihrem Spulenträger unmittelbar auf dem Ventilgehäuse 11 aufgesetzt, und die Erregerwicklung der Magnetspule 27 ist mit den Kontaktstiften 31 eines elektrischen Steckanschlusses 30 verbunden. Dabei sind die Kontaktstifte 31 in einem Steckergehäuse 32 aufgenommen, das in einer Kunststoffumspritzung 33 ausgeformt ist. Die Kunststoffumspritzung 33 ist auf einem Teil des Anschlussstutzens 12 und auf einem Teil des Ventilgehäuses 11 aufgespritzt, übergreift teilweise den Magnettopf 26 und füllt das Innere des Magnettopfs 26 um die Magnetspule 27 herum aus. Der hohle Magnetkern 28 ist im Bereich des Magnettopfes 26 koaxial im Ventilgehäuse 11 festgelegt und schließt mit seiner einen Stirnseite zusammen mit der Stirnseite des Magnetankers 24 einen Arbeitsluftspalt 34 des Elektromagneten 30 ein.

Im Ventil ist ein vom Fluidzulauf 13 zur Zumessöffnung 17 führender Strömungskanal 35 vorhanden, dessen Kanalwände in unterschiedlichen Kanalabschnitten von Anschlussstutzen 12, Magnetkern 28, Magnetanker 24 mit Durchtrittsbohrungen 25, Ventilgehäuse 11 und Ventilsitzträger 14 gebildet sind. Um das Eindringen von im Fluid vorhandenen Fremdpartikeln und sonstigen mechanischen Verunreinigungen in das Ventil zu verhindern, ist eine Filtervorrichtung 40 vorgesehen, die im Strömungskanal 35 in dessen Eingangsbereich nahe dem Fluidzulauf 13 angeordnet ist, hier im Anschlussstutzen 12 axial unverschieblich einliegt. Die Filtervorrichtung 40 weist einen Grobfilter 41 und einen Feinfilter 42 auf, der in Strömungsrichtung des Fluids dem Grobfilter 41 nachgeordnet ist.

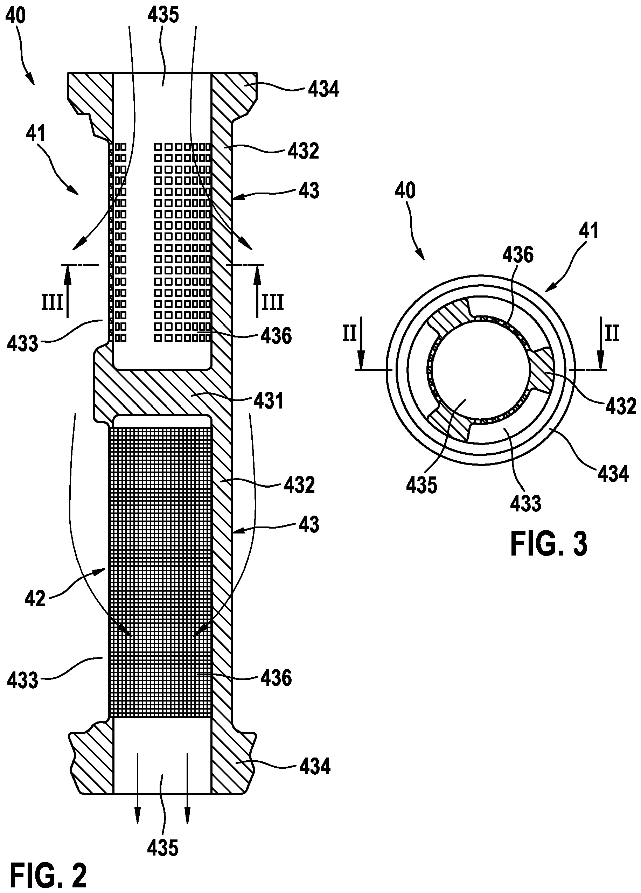

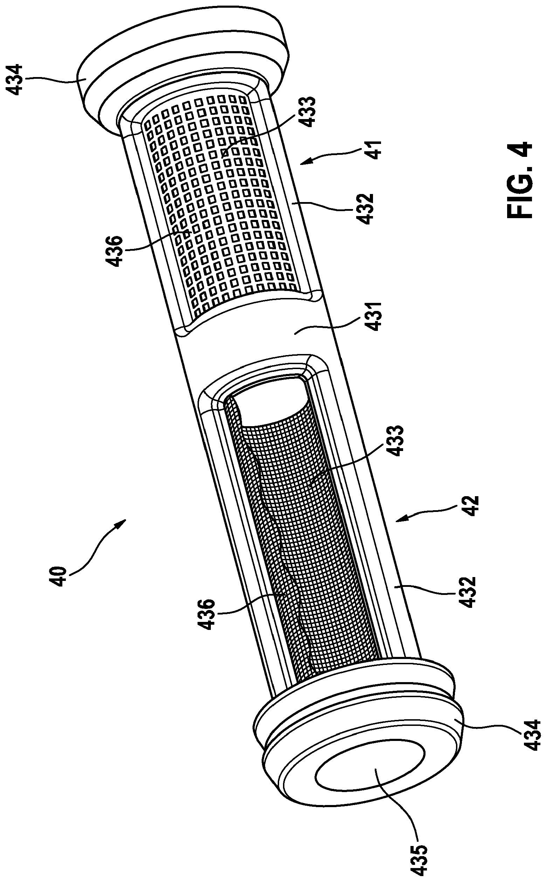

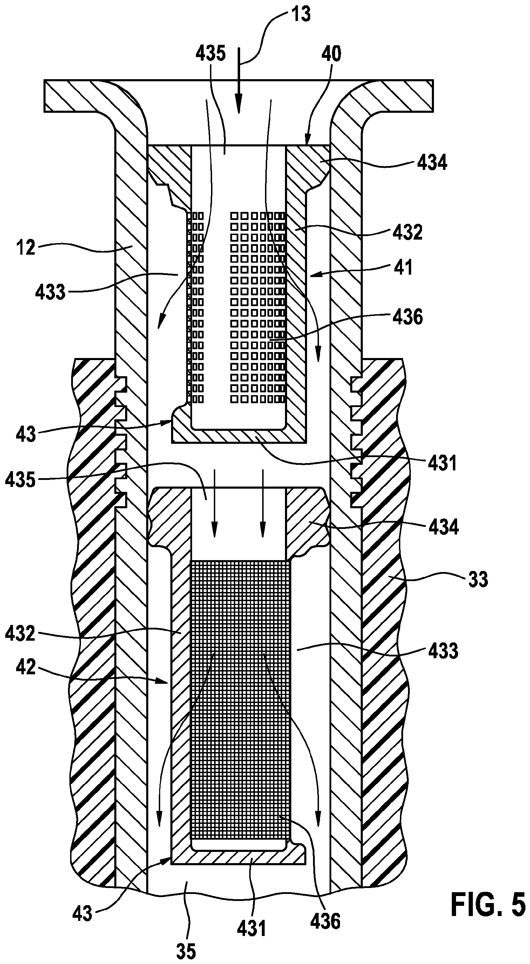

In dem Ausführungsbeispiel der Figur 1 ist die Filtervorrichtung 40 mit Grobfilter 41 und Feinfilter 42 eine bauliche Einheit, wie sie in Figur 2 vergrößert im Schnitt und in Figur 4 in perspektivischer Ansicht dargestellt ist. Hingegen sind in den Ausführungsbeispielen der Figuren 5 bis 7 der Grobfilter 41 und der Feinfilter 42 getrennte Bauelemente, die im Strömungskanal 35 hintereinander in unterschiedlicher Ausrichtung angeordnet sind.

Jeder Filter 41, 42 ist als Filtertopf 43 ausgebildet. Jeder Filtertopf 43 weist eine Topföffnung 435, einen geschlossenen, fluidundurchlässigen Topfboden 431, einen Topfmantel 432, der mit mindestens einem Filterfenster 433 versehen ist, und einen über den Topfmantel 432 radial überstehenden Ringbund 434 auf, der die Topföffnung 435 umgibt und dichtend an der Kanalwand des Strömungskanals 35 anliegt. Unter Filterfenster 433 wird hier eine im Topfmantel 432 vorgehaltene, von einer Filterfläche bedeckte Öffnung verstanden. Das mindestens eine Filterfenster 433 des Grobfilters 41 weist eine grobmaschige oder grobporige Filterfläche 436 und das mindestens eine Filterfenster 433 des Feinfilters 42 eine feinmaschige oder feinporige Filterfläche 436 auf. In den dargestellten Ausführungsbeispielen der Filtervorrichtung 40 sind im Topfmantel 432 drei um 120° zueinander versetzte Filterfenster 433 vorhanden, wie dies aus der Schnittzeichnung gemäß Figur 3 hervorgeht. Die Filterflächen 436 sind auf der zur Topfmitte weisenden Innenseite der Filterfenster 433 angeordnet und am Topfmantel 432 festgelegt. In der perspektivischen Darstellung der Filtervorrichtung 40 gemäß Figur 4 ist die Filterfläche 436 des einen Filterfensters 433 im Feinfilter 42 teilweise ausgeschnitten. Die Filterflächen 436 sind beispielsweise mittels eines Filtergewebes, eines Filtergitters oder eines Filtersiebs realisiert.

In dem Ausführungsbeispiel der Figur 1 liegen die beiden Filtertöpfe 43 mit ihrem Topfboden 431 aneinander und sind miteinander einstückig ausgeführt. Eine solche baueinheitliche Filtervorrichtung 40 lässt sich fertigungstechnisch einfach herstellen, z.B. als einteiliges Kunststoffspritzteil, und lässt sich durch einfaches Einschieben in den Anschlussstutzen 12 zeitsparend montieren, wobei die an voneinander abgekehrten Enden der Filtervorrichtung 40 vorhandenen beiden Ringbunde 434 sich dichtend an die Innenseite des Anschlussstutzens 12 anpressen und damit den Fluiddurchfluss des Grobfilters 41 und den nachfolgenden Durchfluss des Feinfilters 42 sicherstellen. Die beiden in größtmöglichem Abstand voneinander angeordneten Ringbunde 434 ergeben auch einen stabilen Sitz der Filtervorrichtung 40 im Anschlussstutzen 12.

Alternativ ist es möglich, die Filtertöpfe 43 der baueinheitlichen Filtervorrichtung 40 auch so anzuordnen, dass die beiden Topföffnungen 435 einander zugekehrt sind und die die Topföffnungen 435 umgebenden Ringbunde 434 aneinanderliegen und einstückig miteinander ausgeführt sind. In diesem Fall liegt die baueinheitliche Filtervorrichtung 40 nur mit dem mittigen, einzigen Ringbund 435 dichtend an der Innenseite des Anschlussstutzens 12 an, so dass das Fluid durch die Filterflächen 436 des Grobfilters 41 einströmt, die Topföffnungen 435 von Grob- und Feinfilter 41,42 durchströmt und über die Filterflächen 436 des Feinfilters 42 wieder in den Strömungskanal 35 austritt. Auch eine solche baueinheitliche Filtervorrichtung 40 kann im Kunststoffspritzverfahren hergestellt werden. Grundsätzlich können die Filterflächen 436 auch aus Metallgewebe bestehen, z.B. einem Metallgewebezylinder, und die Filtertöpfe 43 mit Topfboden 431, Topfmantel 432 und Ringbund 434 an das Metallgewebe angespritzt werden.

In den Ausführungsbeispielen der Filtervorrichtung 40 gemäß Figuren 5 bis 7 sind Grobfilter 41 und Feinfilter 42 als separate Bauelemente ausgeführt, die nach ihrem Einsetzen in den Strömungskanal 35 die Filtervorrichtung 40 ergeben. Beide Filter 41, 42 sind wieder als Filtertöpfe 43 ausgebildet, wie sie vorstehend beschrieben worden sind. In allen drei Ausführungsbeispielen sind die Filtertöpfe 43 so in den Strömungskanal 35 eingesetzt, dass das Fluid die beiden Filter 41, 42 in der Reihenfolge Grobfilter 41 und Feinfilter 42 durchströmt. Die Zwangsführung des Fluids wird dabei durch die dichtend an der Kanalwand des Strömungskanals 35 anliegenden, die Topföffnungen 435 umgebenden Ringbunde 434 bestimmt. Die Ausführungsbeispiele der Filtervorrichtung 40 in den Figuren 5 bis 7 unterscheiden sich ausschließlich durch die Ausrichtung der beiden Filtertöpfe 43 im Strömungskanal 35.

In dem Ausführungsbeispiel der Figur 5 sind die beiden Filtertöpfe 43 in gleicher Ausrichtung mit lichtem Abstand voneinander angeordnet, so dass die Topföffnung 435 des Feinfilters 42 dem Topfboden 431 des Grobfilters 41 zugekehrt und von diesem beabstandet ist. Das Fluid strömt bei beiden Filtern 41, 42 über die Topföffnungen 435 ein und über die Filterflächen 436 wieder aus.

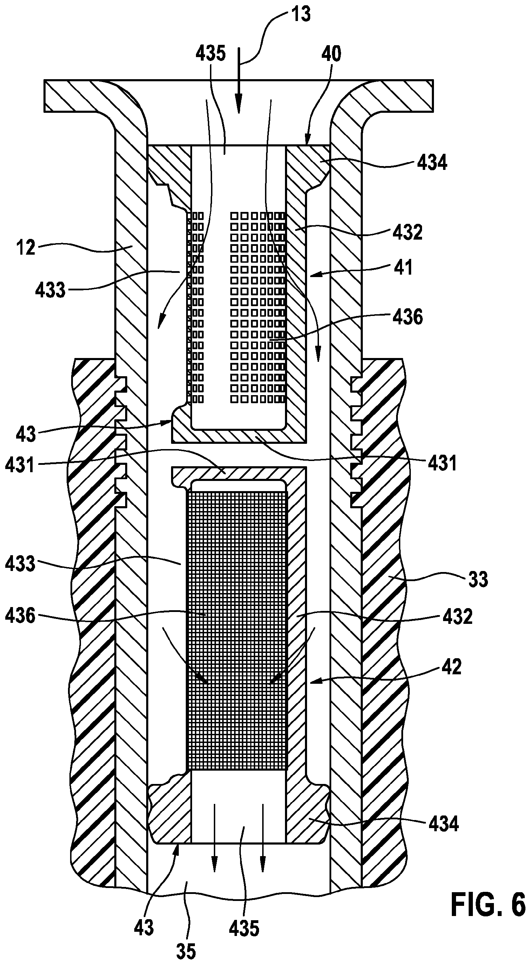

Im Ausführungsbeispiel der Figur 6 ist der Filtertopf 43 des Feinfilters 42 um 180° gedreht in den Strömungskanal 35 eingesetzt, so dass die Topfböden 431 von Grobfilter 41 und Feinfilter 42 einander zugekehrt und voneinander beabstandet sind. Diese Anordnung stimmt mit der baueinheitlichen Filtervorrichtung 40 gemäß Figuren 1 bis 4 überein, mit dem Unterschied, dass die Topfböden 431 nicht miteinander verbunden, sondern voneinander beabstandet sind. Die beiden Topfböden 431 können auch unmittelbar aneinanderliegen.

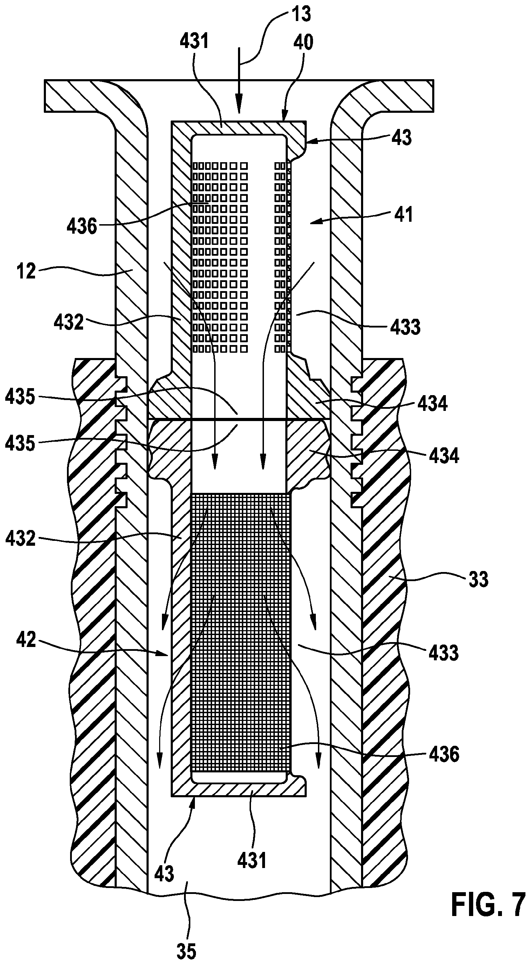

Bei dem Ausführungsbeispiel der Filtervorrichtung gemäß Figur 7 sind die Filtertöpfe 43 von Grobfilter 41 und Feinfilter 42 so in den Strömungskanal 35 eingesetzt, dass die Topföffnungen 435 einander zugekehrt sind und die Ringbunde 434 mit Ihren Stirnseiten unmittelbar aneinanderliegen. Alternativ können die beiden Ringbunde 434 auch axial voneinander beabstandet sein. Das Fluid strömt über die Filterflächen 436 des Grobfilters 41 ein, durchströmt die beiden Topföffnungen 435 und tritt über die Filterflächen 436 des Feinfilters 42 wieder aus der Filtervorrichtung 40 aus.

## Patentansprüche

1. Ventil zum Zumessen von Fluid, mit einem von einem Fluidzulauf (13) zu einer Zumessöffnung (17) führenden Strömungskanal (35) für das Fluid und mit einer im Strömungskanal (35) angeordneten, vom Fluid durchströmten Filtervorrichtung (40), wobei die Filtervorrichtung (40) einen Grobfilter (41) und einen dem Grobfilter (41) in Strömungsrichtung nachgeordneten Feinfilter (42) aufweist, wobei Grobfilter (41) und Feinfilter (42) jeweils als Filtertopf (43) ausgebildet sind, der eine Topföffnung (434), einen fluidundurchlässigen Topfboden (431), einen mit mindestens einem Filterfenster (433) versehenen Topfmantel (432) und einen an der Topföffnung (435) über den Topfmantel (432) radial überstehenden Ringbund (434) aufweist, der sich dichtend an die Kanalwand des Strömungskanals (35) anpresst, und wobei das mindestens eine Filterfenster (433) des Grobfilters (41) eine grobmaschige oder grobporige Filterfläche (436) und das mindestens eine Filterfenster (433) des Feinfilters (41) eine feinmaschige oder feinporige Filterfläche (436) aufweist,
**dadurch gekennzeichnet, dass** die Filtertöpfe (43) als Kunststoffspritzteil hergestellt sind und die Filterflächen (436) entweder im Kunststoffspritzverfahren hergestellt sind oder die Filterflächen (436) aus einem Filtergewebe, insbesondere aus Metallgewebe, bestehen.

2. Ventil nach Anspruch 1, **dadurch gekennzeichnet, dass** der Topfmantel (432) drei um jeweils 120° zueinander versetzte Filterfenster (433) aufweist und die Filterflächen (436) an der der Topfmitte zugekehrten Innenseite des Topfmantels (432) festgelegt sind.

3. Ventil nach Anspruch 1 oder 2, **dadurch gekennzeichnet, dass** die Filtertöpfe (43) von Grobfilter (41) und Feinfilter (42) im Strömungskanal (35) so angeordnet sind, dass die Topföffnung (435) des Feinfilters (42) dem Topfboden (431) des Grobfilters (41) zugekehrt ist und einen lichten Abstand vom Topfboden (431) aufweist.

4. Ventil nach Anspruch 1 oder 2, **dadurch gekennzeichnet, dass** die Filtertöpfe (43) von Grobfilter (41) und Feinfilter (42) im Strömungskanal (35) so angeordnet sind, dass die Topfböden (431) oder die Topföffnungen (435) einander zugekehrt sind und die Topfböden (431) bzw. Topföffnungen (435) unmittelbar aneinanderliegen oder einen lichten Abstand voneinander aufweisen.

5. Ventil nach Anspruch 4, **dadurch gekennzeichnet, dass** die aneinanderliegenden Topfböden (431) oder die die aneinanderliegenden Topföffnungen (435) umschließenden Ringbunde (434) der Filtertöpfe (43) von Grobfilter (41) und Feinfilter (42) einstückig miteinander ausgeführt sind.

6. Ventil nach Anspruch 5, **dadurch gekennzeichnet, dass** die Filtertöpfe (43) mit Filterflächen (436) als baueinheitliches Kunststoffspritzteil hergestellt sind.

7. Ventil nach Anspruch 6, **dadurch gekennzeichnet, dass** die Filterflächen (436) aus einem Metallgewebe oder -gitter bestehen, an das das Kunststoffspritzteil angespritzt ist.

8. Ventil nach einem der Ansprüche 6 oder 7, **dadurch gekennzeichnet, dass** das Ventil ein Kraftstoff-Einspritzventil für Kraftstoffeinspritzanlagen in Brennkraftmaschinen ist.

## Claims

1. Valve for metering fluid, having a flow duct (35), which leads from a fluid inlet (13) to a metering opening (17), for the fluid, and having a filter device (40) which is arranged in the flow duct (35) and through which the fluid flows, wherein the filter device (40) has a coarse filter (41) and a fine filter (42) arranged downstream of the coarse filter (41) in a flow direction, wherein the coarse filter (41) and fine filter (42) are each in the form of a filter pot (43) which has a pot opening (434), a fluid-impermeable pot base (431), a pot shell (432) equipped with at least one filter window (433), and a ring-shaped collar (434) which, at the pot opening (435), projects radially beyond the pot shell (432) and which presses sealingly against the duct wall of the flow duct (35), and wherein the at least one filter window (433) of the coarse filter (41) has a coarse-mesh or coarse-pored filter surface (436), and the at least one filter window (433) of the fine filter (41) has a fine-mesh or fine-pored filter surface (436), **characterized in that** the filter pots (43) are produced as plastics injection-moulded parts, and either the filter surfaces (436) are produced in the plastics injection-moulding process or the filter surfaces (436) are composed of a filter fabric, in particular of metal fabric.

2. Valve according to Claim 1, **characterized in that** the pot shell (432) has three filter windows (433) which are offset with respect to one another by in each case 120°, and the filter surfaces (436) are fixed to the inner side, facing toward the pot centre, of the pot shell (432).

3. Valve according to Claim 1 or 2, **characterized in that** the filter pots (43) of coarse filter (41) and fine filter (42) are arranged in the flow duct (35) such that the pot opening (435) of the fine filter (42) faces toward the pot base (431) of the coarse filter (41) and has a clear spacing to the pot base (431).

4. Valve according to Claim 1 or 2, **characterized in that** the filter pots (43) of coarse filter (41) and fine filter (42) are arranged in the flow duct (35) such that the pot bases (431) or the pot openings (435) face toward one another and the pot bases (431) or pot openings (435) lie directly against one another or have a clear spacing to one another.

5. Valve according to Claim 4, **characterized in that** the pot bases (431) which lie against one another, or the ring-shaped collars (434), which surround the pot openings (435) which lie against one another, of the filter pots (43) of coarse filter (41) and fine filter (42) are formed in one piece with one another.

6. Valve according to Claim 5, **characterized in that** the filter pots (43) with filter surfaces (436) are produced as a structurally integral plastics injection-moulded part.

7. Valve according to Claim 6, **characterized in that** the filter surfaces (436) are composed of a metal fabric or lattice onto which the plastics injection-moulded part is injection moulded.

8. Valve according to either of Claims 6 or 7, **characterized in that** the valve is a fuel injection valve for fuel injection systems in internal combustion engines.

## Revendications

1. Soupape de dosage de fluide, comprenant un conduit d'écoulement (35) de fluide conduisant depuis une alimentation en fluide (13) jusqu'à une ouverture de dosage (17) et un dispositif de filtre (40) disposé dans le conduit d'écoulement (35) et parcouru par le fluide, le dispositif de filtre (40) présentant un filtre grossier (41) et un filtre fin (42) placé après le filtre grossier (41) dans le sens de l'écoulement, le filtre grossier (41) et le filtre fin (42) étant réalisés à chaque fois sous forme de pot filtrant (43) qui présente une ouverture de pot (434), un fond de pot (431) imperméable aux fluides, une enveloppe de pot (432) pourvue d'au moins une fenêtre de filtre (433) et un épaulement annulaire (434) faisant saillie radialement au-delà de l'enveloppe de pot (432) au niveau de l'ouverture de pot (435), lequel presse hermétiquement contre la paroi de conduit du conduit d'écoulement (35), et l'au moins une fenêtre de filtre (433) du filtre grossier (41) présentant une surface de filtre (436) à grosse mailles ou à pores grossiers et l'au moins une fenêtre de filtre (433) du filtre fin (41) présentant une surface de filtre (436) à fines mailles ou à pores fins,
**caractérisée en ce que** les pots filtrants (43) sont fabriqués sous forme de pièce moulée par injection de plastique et les surfaces de filtre (436) sont fabriquées dans un procédé de moulage par injection de plastique ou les surfaces de filtre (436) se composent d'un tissu filtrant, en particulier d'un tissu métallique.

2. Soupape selon la revendication 1, **caractérisée en ce que** l'enveloppe de pot (432) présente trois fenêtres de filtre (433) décalées les unes des autres à chaque fois de 120° et les surfaces de filtre (436) sont fixées au niveau du côté intérieur de l'enveloppe de pot (432) tourné vers le centre du pot.

3. Soupape selon la revendication 1 ou 2, **caractérisée en ce que** les pots filtrants (43) du filtre grossier (41) et du filtre fin (42) sont disposés dans le conduit d'écoulement (35) de telle sorte que l'ouverture de pot (435) du filtre fin (42) soit tournée vers le fond de pot (431) du filtre grossier (41) et présente un faible espacement par rapport au fond de pot (431).

4. Soupape selon la revendication 1 ou 2, **caractérisée en ce que** les pots filtrants (43) du filtre grossier (41) et du filtre fin (42) sont disposés dans le conduit d'écoulement (35) de telle sorte que les fonds de pot (431) ou les ouvertures de pot (435) soient tournés les uns vers les autres et que les fonds de pot (431) ou les ouvertures de pot (435) s'appliquent directement les uns contre les autres ou présentent un faible espacement les uns des autres.

5. Soupape selon la revendication 4, **caractérisée en ce que** les fonds de pot (431) s'appliquant les uns contre les autres ou les épaulements annulaires (434) des pots filtrants (43) du filtre grossier (41) et du filtre fin (42), entourant les ouvertures de pot (435) s'appliquant les unes contre les autres, sont réalisés d'une seule pièce les uns avec les autres.

6. Soupape selon la revendication 5, **caractérisée en ce que** les pots filtrants (43) sont fabriqués avec les surfaces de filtre (436) sous forme de pièce moulée par injection de plastique de construction unitaire.

7. Soupape selon la revendication 6, **caractérisée en ce que** les surfaces de filtre (436) se composent d'un tissu ou d'un treillis métallique sur lequel est surmoulée la pièce moulée par injection de plastique.

8. Soupape selon l'une quelconque des revendications 6 ou 7, **caractérisée en ce que** la soupape est une soupape d'injection de carburant pour des installations d'injection de carburant dans des moteurs à combustion interne.
